(19) Europäisches Patentamt
European Patent Office
Office européen des brevets

(11) Publication number: **0 143 606**
**B1**

(12) # EUROPEAN PATENT SPECIFICATION

(45) Date of publication of patent specification: **17.08.88**

(21) Application number: **84308083.9**

(22) Date of filing: **21.11.84**

(51) Int. Cl.4: **C 25 B 13/00,** C 25 B 13/08, B 01 D 13/00, B 01 D 13/04, C 08 J 5/22 // C25B1/46

(54) **Production of ion-exchange membrane.**

(30) Priority: **29.11.83 GB 8331860**
**22.03.84 GB 8407395**

(43) Date of publication of application:
**05.06.85 Bulletin 85/23**

(45) Publication of the grant of the patent:
**17.08.88 Bulletin 88/33**

(84) Designated Contracting States:
**BE DE FR GB IT NL SE**

(56) References cited:
**EP-A-0 086 595**
**GB-A-1 547 534**
**US-A-4 000 057**
**US-A-4 124 477**

(73) Proprietor: **IMPERIAL CHEMICAL INDUSTRIES PLC**
**Imperial Chemical House Millbank**
**London SW1P 3JF (GB)**

(72) Inventor: **Smith, Peter John**
**1 Moorland Park**
**Cuddington Sandiway Cheshire (GB)**
Inventor: **Moss, Keith Graham**
**162 Main Road**
**Moulton Northwhich Cheshire (GB)**

(74) Representative: **Draggett, Peter Thornton et al**
**Imperial Chemical Industries PLC P.O. Box 6**
**Bessemer Road**
**Welwyn Garden City Herts AL7 1HD (GB)**

**EP 0 143 606 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the production of an ion-exchange membrane and in particular to production of an ion-exchange membrane which is particularly suitable for use in an electrolytic cell.

Electrolytic cells are known comprising a plurality of anode and cathodes with each anode being separated from the adjacent cathode by an ion-exchange membrane which divides the electrolytic cell into a plurality of anode and cathode compartments. The anode compartments of such a cell are provided with means for feeding electrolyte to the cell, suitably from a common header, and with means for removing products of electrolysis from the cell. Similarly, the cathode compartments of the cell are provided with means for removing products of electrolysis from the cell, and optionally with means for feeding water or other fluid to the cell. The electrolytic cells may be of the monoplar or bipolar type.

For example, electrolytic cells of the filter press type may comprise a large number of alternating anodes and cathodes, for example fifty anodes alternating with fifty cathodes, although the cell may comprise even more anodes and cathodes, for example up to one hundred and fifty alternating anodes and cathodes.

In such an electrolytic cell the membranes are essentially hydraulically impermeable and in use ionic species, e.g. hydrated ionic species, and transported across the membrane between the anode and cathode compartments of the cell. Thus, when an aqueous alkali metal chloride solution is electrolysed in a chlor-alkali cell equipped with cation-exchange membranes the solution is fed to the anode compartments of the cell and chlorine produced in the electrolysis and depleted alkali metal chloride solution are removed from the anode compartments, alkali metal ions are transported across the membranes to the cathode compartments of the cell to which water or dilute alkali metal hydroxide solution may be fed, and hydrogen and alkali metal hydroxide solution produced by the reaction of alkali metal ions with hydroxyl ions are removed from the cathode compartments of the cell.

Electrolytic cells of the type described may be used particularly in the production of chlorine and sodium hydroxide by the electrolysis of aqueous sodium chloride solution.

Ion-exchange membranes for use in such electrolytic cells are generally cation-exchange membranes, and particularly where the liquors in the cell are corrosive as in a chlor-alkali cell, the membrane may be a sheet of a corrosion-resistant fluoropolymer containing acidic groups, or derivatives of acidic groups.

Suitable acidic groups are sulphonic acid, carboxylic acid or phosphonic acid, or derivatives thereof.

Although the ion-exchange membrane is electrically conducting the membrane does possess an electrical resistance, and the voltage at which an electrolytic cell may be operated is dependent in part on the resistance of the membrane. The electrical resistance of the membrane is a function of the thickness of the membrane and in order to reduce the voltage of operation of an electrolytic cell, and also the capital cost of the membrane, it is desirable that the thickness of the membrane be reduced.

Furthermore, in such an electrolytic cell the membrane is secured to the cell, for example, by fixing to the anode or cathode or by clamping between gaskets. It is desirable that the membrane be installed in the cell in a taut state and that the membrane remain in a substantially taut state when electrolyte is charged to the cell and the cell is operated. However, if a membrane is installed in an electrolytic cell in a dry state and is fixed tautly therein it is found that when in use electrolyte is contacted with the membrane the membrane swells and expands and becomes slack and may even become wrinkled. As a result there may be uneven release of gas and an increase in the voltage of the cell. This is a particular disadvantage where the cell is designed to operate at low, or zero, anode-cathode gap.

In order to alleviate this problem of swelling and slackness of the membrane in use it has been proposed to pre-swell and thus expand the membrane before installing the membrane in an electrolytic cell, for example by soaking the membrane in water, in an aqueous sodium chloride solution, or in an aqueous sodium hydroxide solution. Ideally, the membrane should be pre-swollen to an extent which is at least as great as that by which a dry membrane would be swollen by contact with the electrolyte in the electrolytic cell.

In US Patent No. 4000057 there is described the pre-swelling of a membrane before installation of the membrane in an electrolytic cell the method comprising contacting the membrane with a liquid medium in which the membrane exhibits a substantially flat expansion versus time curve for at least four hours after contacting the membrane with the liquid medium. Suitable liquid media include, for example, aqueous solutions of ethylene glycol, glycerine and higher fatty alcohols. As a result of the flat expansion versus time curve the membrane remains swollen for a substantial period of time thus facilitating installation of the membrane in a cell.

Although the aforementioned methods do assist in overcoming the problem of swelling of a membrane when the membrane is contacted with electrolyte in an electrolytic cell they do suffer from substantial disadvantages. Thus, the pre-swollen membranes are wet and remain wet during installation in the electrolytic cell and are thus difficult to handle. Special handling precautions may need to be taken, for example where the membrane has been pre-swollen by contact with a corrosive liquid, e.g. a caustic soda solution. Also difficulty may also be experienced in securing the wet membrane in the electrolytic cell in a leak-tight manner, for example between a pair of gaskets.

In US Patent No. 4124477 there is described a method of pre-swelling a membrane in which the membrane is immersed in boiling water for 1 to 4 hours to render the membrane soft and pliable. The membrane is then secured tautly to a frame by stretching the membrane diagonally at the corners and clamping the corners of the membrane to the corners of the frame, the sides of the membrane being clamped to the sides of the frame, and the membrane is left to dry at ambient conditions on the frame. The frame has approximately the same dimensions as those of the anode the membrane is in effect merely pulled tautly over the edges of the frame and held thereon during the drying process.

A similar process is described in Japanese Patent Publication No. 58-3990 in which, prior to fitting an ion-exchange membrane in an electrolytic cell, the membrane is immersed in water, an aqueous alkali metal chloride solution, an aqueous solution of a mineral acid, or an aqueous solution of a caustic alkali, and the resultant swollen ion-exchange membrane is dried while maintained at its swollen dimensions, e.g. while fixed to a frame.

In the aforementioned processes the extent of expansion which is achieved by pre-swelling the membrane in a liquid medium is not very great and is limited to that which is brought about by contact of the membrane with the liquid medium. This extent of expansion which may be up to 10% in one direction and in a direction transverse thereto, may be sufficient to maintain the membrane in a taut state when the membrane is contacted with the electrolyte in an electrolytic cell, and thus minimise the problems associated with slackness and the formation of wrinkles in the membrane when the electrolytic cell is operated.

Other methods have been proposed by which an ion-exchange membrane may be expanded to an extent substantially greater than that brought about by mere contact of the membrane with a liquid medium. Thus, in our European Patent Publications Nos. 0 086 595 and 0 086 596 we have described expanding a membrane by stretching the membrane in the dry state in order to increase its surface area per unit weight, and thereafter securing the membrane to an electrolytic cell or to a part thereof. The stretching may be effected, for example, by passing the membrane around and between rollers operating at different peripheral speeds, or by applying a stretching force to opposed edges of the membrane. The stretching is preferably effected at elevated temperature and the expansion produced by stretching may be locked into the membrane by cooling the expanded stretched membrane to a lower temperature.

The extent of expansion may be such that there is an increase of 100% or more in the surface area per unit weight of the membrane. The thus expanded membrane, when installed in an electrolytic cell and contacted with an electrolyte therein, not only remains taut and unwrinkled but also may result in operation of the electrolytic cell at substantially reduced voltage as a result of the substantial reduction in the thickness of the membrane brought about by the stretching of the membrane.

Stretching of an ion-exchange membrane in a dry state is most readily effected when the membrane contains ion-exchange groups in the form of ester precursors of such groups, for example carboxylic acid ester groups.

Stretching of a membrane in a dry state is not as readily effected when the membrane comprises acidic groups, e.g. carboxylic acid or sulphonic acid groups as the ion-exchange groups, nor when the ion-exchange groups are in the form of salts of acidic groups, e.g. alkali metal salts of carboxylic acid or sulphonic acid. It may be difficult to effect a substantial amount of expansion and furthermore in stretching the membrane there is a danger that the membrane will be ruptured or otherwise damaged.

The present invention relates to a method of expanding an ion-exchange membrane by stretching the membrane which method may be operated with ion-exchange membranes containing a variety of different ion-exchange groups or precursors therefor, and by means of which a substantial increase in the surface area per unit weight of the membrane may readily be achieved. The resultant expanded membrane is dry and thus is easily installed in an electrolytic cell, when installed in an electrolytic cell it remains taut and unwrinkled when contacted with the electrolyte therein, and also it may result in operation of the cell at reduced voltage as a result of the reduction in thickness of the membrane brought about by the stretching.

According to the present invention there is provided a method of producing an ion-exchange membrane of an organic polymer containing ion-exchange groups or group convertible to ion-exchange groups in which method the membrane is expanded by stretching the membrane in order to effect an increase of at least 5% in the surface area per unit weight of the membrane, the membrane containing a liquid medium during the stretching of the membrane.

As the membrane contains a liquid medium during the stretching process the membrane is more readily stretched than is the same membrane when in the dry state.

The membrane must contain some liquid medium during the stretching process in order to improve the stretching characteristics of the membrane. The amount of liquid medium which the membrane should contain is dependent inter alia on the organic polymer of the membrane and the ion-exchange groups of precursors therefor in the membrane, the nature of the liquid medium, and the amount of expansion which it is desired to effect by stretching.

The membrane may be contacted with the liquid medium, e.g. by immersing the membrane in the liquid medium or by spraying the membrane with the liquid medium, prior to expanding the membrane by stretching.

It is a surprising feature of the invention that a substantial improvement may be achieved in the

ability of the membrane to be stretched without rupture or other damage when the membrane contains only a small amount of liquid medium such as may be absorbed by the membrane after contacting the membrane with the liquid medium for only a very short period of time.

For example, when the membrane is contacted with a liquid medium for a time as short as 1 minute the ability of the membrane to be expanded by stretching may be considerably improved. Contact of the membrane with a liquid medium for a longer period of time, e.g. at least 5 minutes, prior to stretching the membrane will result in an improvement in the ability of the membrane to be expanded by stretching. In general it will not be necessary to contact the membrane with the liquid medium for longer than 10 hours prior to stretching the membrane.

The temperature of the liquid medium may be at or near ambient temperature, or it may be at elevated temperature, e.g. at a temperature of up to 100°C.

The liquid medium should of course be a medium which is capable of swelling the membrane. The liquid medium may be a water or an aqueous solution, e.g. an aqueous solution of an inorganic material. For example, the liquid medium may be an aqueous solution of an alkali metal hydroxide, carbonate, bicarbonate, or chloride, e.g. an aqueous solution of sodium hydroxide, carbonate, bicarbonate or chloride. The liquid medium may be an aqueous solution of a water-soluble organic material, for example, an aqueous solution of an alcohol, or polyol, e.g. methanol, ethanol, propanol, butanol, pentanol, ethylene glycol or glycerol, or it may be an organic material per se. The liquid medium may comprise an aqueous solution of two or more inorganic materials or two or more organic materials per se. Other inorganic or organic materials, or solutions thereof, may be used as the liquid medium.

The membrane may be contacted with the liquid medium until the membrane becomes soft and pliable, although this is unnecessary, even contacting the membrane with the liquid medium for a very short period of time such that there is little if any detectable softening or increase in pliability of the membrane being sufficient to result improvement in the ability of the membrane to be expanded by stretching. The choice of liquid medium, the temperature thereof, and the time of contact of the liquid medium with the membrane may be determined by reasonable trial experiment.

In order to effect expansion of the membrane by stretching the membrane is mounted on apparatus suitable for effecting the stretching. For example, the membrane may be stretched on apparatus which is capable of applying a stretching force to opposed edges of the membrane. Thus, the stretching may be effected in a stretching frame.

Alternatively, the apparatus may comprise a pair of rollers and stretching may be effected by passing the membrane between the rollers operating at different peripheral speeds.

The membrane may be stretched uniaxially or biaxially. Biaxially stretching may be effected in two directions simultaneously or sequentially.

The expansion of the membrane effected by stretching in the method of the invention will be such as to result in an increase of at least 5% in the surface area per unit weight of the membrane, that is a decrease of at least 5% in the thickness of the membrane.

In order to prevent wrinkling of the membrane when the membrane is subsequently used in an electrolytic cell an increase of about 15 to 20% in the surface area per unit weight of the membrane will generally be sufficient.

In order that the expansion of the membrane may result in a substantial reduction in voltage when the membrane is used in an electrolytic cell the expansion which is effected by stretching is preferably such as to result in an increase of at least 50%, preferably at least 100%, in the surface area per unit weight of the membrane. However an increase of 20 to 50% is often adequate. The stretching may effect a 10-fold increase or greater in the surface per unit weight of the membrane.

Although extremely thin membranes may be produced in the method of the invention the expanded, stretched membrane should not be so thin that it is highly susceptible to damage when used in an electrolytic cell. In general the expanded, stretched membrane will have a thickness of at least 0.02 mm, preferably at least 0.1 mm.

In a preferred embodiment of the invention the membrane is mounted on the apparatus in which stretching is to be effected prior to contact of the membrane with the liquid medium, and the membrane is thereafter contacted with the liquid medium. This embodiment of the method of the invention is particularly preferred where the membrane has a surface coating, for example, of an electrocatalytically-active electrode material, or of a particulate non-electrode material, as the handling of such a membrane which is necessary in order to mount the membrane on stretching apparatus may result in substantial damage to the surface coating on the membrane where the membrane is wet from contact with the liquid medium.

After stretching of the membrane the membrane may be dried before the membrane is mounted in an electrolytic cell. The membrane may merely be allowed to dry, e.g. by allowing the liquid medium to evaporate. Alternatively, drying of the membrane may be assisted, for example by heating the membrane and/or by applying a stream of air to the membrane.

The expanded stretched membrane may be removed from the stretching apparatus prior to drying of the membrane. In this case there will be some relaxation in the stretched membrane, particularly when the membrane dries, such that there will be a decrease in the surface area of the membrane per unit weight although, the membrane will not return to its original surface area per unit weight prior to contact with the liquid medium and stretching. The expanded, stretched membrane may be removed from the stretching apparatus after the membrane has been dried. In this case there will be only a small amount of relaxation of the membrane after removal of the membrane from the stretching apparatus and most of the increase in surface area per unit weight of the membrane effected by stretching will be retained.

When expanded stretched membrane produced in the method of the invention is installed in an electrolytic cell and secured therein and the membrane is contacted with an electrolyte, particularly at an elevated temperature, for example with aqueous alkali metal chloride solution at a temperature which may be as high as 95°C in a chlor-alkali cell, the expansion which is retained into the membrane is released, or partially released, and the membrane tends to contract towards its original state, although the membrane is of course restrained in the electrolytic cell. This tendency to contract is counteracted by the expansion of the membrane caused by swelling brought about by contacting the membrane with the electrolyte, with the result that the membrane installed in the electrolytic cell remains taut and does not become wrinkled during use.

The ion-exchange membrane is favourably a cation-exchange membrane containing acidic groups or derivatives thereof which are convertible to acidic groups. In order to provide resistance to the corrosive environment encountered in many electrolytic cells, particularly in chlor-alkali cells, the membrane is preferably a fluoropolymer, and more preferably a perfluoropolymer, containing such acidic groups or derivatives thereof. The acidic groups in the favoured membrane and derivatives thereof may be for example sulphonic acid, carboxylic acid, or phosphonic acid groups or derivatives thereof and such groups or their derivatives may be present in the membrane in the range of 0.2 to 2.0 meq/g of dry membrane.

For example, the organic polymer may contain the groups

$$[C_m F_{2m}]_M \quad \text{and} \quad [CF_2\text{—}\underset{\substack{| \\ X}}{C}F]_N$$

where m has a value of 2 to 10, and is preferably 2, the ratio of M to N is preferably such as to give an equivalent weight of the groups X in the range 500 to 2000, that is to give a gram equivalent of X per 500 to 2000 gm of polymer, and X is chosen from

$$A \quad \text{or} \quad [\text{—}OCF_2\text{—}\underset{\substack{| \\ Z}}{C}F]_pA$$

where p has a value of for example 1 to 3, Z is fluorine or a perfluoroalkyl group having from 1 to 10 carbon atoms and A is a carboxylic acid group, a sulphonic acid group or a phosphonic acid group, or a derivative thereof.

Suitable derivatives of the acidic groups include salts of such groups, for example metal salts of such groups, particularly alkali metal salts. Suitable derivatives include in particular derivatives convertible to acidic groups by hydrolysis, for example acid halide groups, e.g. $—SO_2F$ and $—COF$, nitrile groups $—CN$, acid amide groups, e.g. $—CONR_2$, where R is H or alkyl, and acid ester groups, e.g. COOR, where R is an alkyl group.

Suitable cation-exchange membranes are those described, for example, in the GB Patents Nos. 1184321, 1402920, 1406673, 1455070, 1497748, 1497749, 1518387 and 1531068.

The ion-exchange membrane preferably comprises an organic polymeric material containing a plurality of fixed anionic groups associated with cations, characterised in that at least some of the cations comprise an organic group or a plurality of organic groups.

The organic polymeric material of the membrane preferably comprises a fluoropolymer, and is most preferably a perfluoropolymer.

The fixed anionic groups in the preferred organic polymeric material may be, for example, sulphonic acid, carboxylic acid, or phosphonic acid groups, and the groups may suitably be present in the organic polymeric material in such a proportion that the ion-exchange capacity of the membrane is in the range 0.2 to 2.0 meq/g of dry membrane.

The organic polymer material may for example contain the groups

$$[C_m F_{2m}]_M \quad \text{and} \quad [CF_2\text{—}\underset{\substack{| \\ E}}{C}F]_N$$

where m has a value of 2 to 10, and is preferably 2, the ratio of M to N is preferably such as to give an equivalent weight of the groups E in the range 500 to 2000, that is to give a gram equivalent of E per 500 to 2000 gm of polymer, and E is chosen from

$$G^- Y^+ \quad \text{or} \quad [\text{—}OCF_2\text{—}\underset{\substack{| \\ Z}}{C}F]_pG^- Y^+$$

where p has a value of for example 1 to 3, Z is fluorine or a perfluoroalkyl group having from 1 to 10 carbon atoms, $G^-$ is a fixed anionic group, e.g. $—COO^-$ or $—SO_3^-$, and $Y^+$ is a cation containing an organic group or a plurality of organic groups.

The cation may be a nitrogen-containing cation. For example, the cation may be a protonated amine, e.g. a protonated primary, secondary or tertiary amine. Where the cation is a nitrogen-containing cation it is preferably a quaternary ammonium cation as ion-exchange membranes containing such cations are readily stretched in

order to increase the surface area per unit weight of the membrane.

The cation may be phosphorus-containing cation, for example a protonated phosphine or a quaternary phosphonium cation.

The organic group in the cations may be an alkyl group, e.g. a methyl, ethyl, propyl, butyl or pentyl group, or it may be an aromatic group, e.g. a benzyl group, or it may be a cycloalkyl group.

In the preferred ion-exchange membrane at least some of the cations comprise an organic group or a plurality of organic groups. We do not exclude from the scope of the invention an ion-exchange membrane in which some only of the cations comprise an organic group or a plurality of organic groups. In this case some of the fixed anionic groups may for example be in a free acid form or be associated with other cations, for example metallic cations, e.g. alkali metal cations. However, substantially all of the cations may comprise an organic group or a plurality of organic groups.

The sheet of preferred membrane may suitably have a thickness before stretching in the range 0.05 to 2.0 mm.

The preferred ion-exchange membrane of the invention may be produced by reacting an ion-exchange membrane which comprises an organic polymeric material containing fixed anionic group or suitable precursors therefor with a salt of the desired cation. The ion-exchange membrane which is so reacted may be in the form of a sheet.

For example, an ion-exchange membrane containing sulphonic acid groups in the form of the free acid groups, or metal salts thereof, may be reacted with a salt of the desired cation.

An ion-exchange membrane containing carboxylic acid groups in the form of the free acid, or metal salts thereof, may be reacted with a salt of the desired cation.

The salt of the desired cation may be, for example, a quaternary ammonium or quaternary phosphonium salt, e.g. a halide, sulphate or nitrate. The salt may be a salt of a protonated primary, secondary or tertiary amine or phosphine, e.g. a halide, sulphate or nitrate.

The salt of the cation is suitably used in the form of a solution thereof, for example, an aqueous solution thereof. Reaction may be effected by contacting the ion-exchange membrane with the solution of the salt of the cation, e.g. the ion-exchange membrane may be immersed in the solution.

In order to accelerate the reaction the solution may be at elevated temperature, e.g. a temperature between 30°C and 100°C. The reaction time which is used will depend on the salt of the cation which is used and on the nature of the fixed anionic group in the ion-exchange membrane. Suitable reaction times may be chosen by means of simple experiment.

In an alternative embodiment the ion-exchange membrane may be contacted with a liquid medium before reaction with the salts of the cation. Thus, the ion-exchange membrane may be contacted with a solution of an ammonium or alkali metal compound, e.g. a halide bicarbonate or hydroxide, in order to swell the membrane and the thus swollen membrane may then be contacted with the salts of the cation, e.g. with a solution thereof. The use of such a swollen membrane assists in effecting reaction of the membrane with the salt of the cation.

After effecting the reaction the membrane may be stretched directly without any interim drying.

The preferred stretched membrane of the present invention comprises a plurality of fixed anionic groups associated with cations which comprise an organic group or a plurality of organic groups. A membrane comprising such organic groups may not be suitable for use as an ion-exchange membrane as the cations in the membrane must be the same as those in the solution which is to be electrolysed in the electrolytic cell. Thus, where a solution of an alkali metal chloride is to be electrolysed the membrane must be treated in order to replace the cations comprising organic groups by alkali metal ions. Similarly the favoured stretched membrane of the present invention may comprise acidic group derivatives which need to be treated to convert these derivatives to the desired alkali metal salts of the acidic group. This treatment may be effected by contacting the membrane, after installation in the cell, with a solution of an alkali metal hydroxide. This replacement of cations containing organic groups by alkali metal ions is most readily effected, in the case where the cations are protonated amine or phosphine groups, or quaternary ammonium or phosphonium groups, when the organic groups are lower alkyl groups, for example methyl or ethyl groups, and for this reason lower alkyl organic groups are preferred. Cations containing such groups are more readily replaced than are cations containing, for example, aromatic organic groups, e.g. benzyl groups.

The membrane may contain two or more different acidic groups.

The membrane may comprise a single sheet of organic polymeric material or it may comprise a laminate of two or more sheets or organic polymeric material, which polymeric materials may be the same or different. For example, the membrane may comprise a laminate of a sheet of organic polymeric material containing sulphonic acid group anions and a sheet of an organic polymeric material containing carboxylic acid group anions.

The membrane may be reinforced, for example with a net of fluoropolymer, although such reinforced membranes are not preferred as difficulty may be experienced in stretching the reinforcing net. The membrane may be coated with electrode or non-electrode materials. Suitable electrode and electrode-coating materials are mentioned hereinafter.

The expanded stretched membrane may be secured into the electrolytic cell or to a part thereof by any convenient means. For example, the membrane may be securely clamped between

a pair of gaskets in the electrolytic cell, or the membrane may be secured to a frame which is subsequently installed in the electrolytic cell, or the membrane may be secured to an electrode.

The method of the present invention is particularly suitable for application to an ion-exchange membrane which is to be installed in an electrolytic cell of the filter press type. Electrolytic cells of the filter press type may comprise a large number of alternating anodes and cathodes with an ion-exchange membrane positioned between each anode and adjacent cathode. Such cells may comprise, for example, fifty anodes alternating with fifty cathodes, although the cell may comprise even more anodes and cathodes, for example up to one hundred and fifty alternating anodes and cathodes.

In the electrolytic cell the electrodes will generally although not necessarily, be made of a metal or alloy. The nature of the metal or alloy will depend on whether the electrode is to be used as an anode or cathode and on the nature of the electrolyte which is to be electrolysed in the electrolytic cell.

Where aqueous alkali metal chloride solution is to be electrolysed and the electrode is to be used as an anode the electrode is suitably made of a film-forming metal or an alloy thereof, for example of zirconium, niobium, tungsten or tantalum, but preferably of titanium, and the surface of the anode suitably carries a coating of an electro-conducting electrocatalytically active material. The coating may comprise one or more platinum group metals, that is platinum, rhodium, iridium, ruthenium, osmium or palladium, and/or an oxide of one or more of these metals. The coating of platinum group metal and/or oxide may be present in admixture with one or more non-noble metal oxides, particularly one or more film-forming metal oxides, e.g. titanium dioxide.

Electro-conducting electrocatalytically active materials for use as anode coatings in an electrolytic cell for the electrolysis of aqueous alkali metal chloride solution, and methods of application of such coatings, are well known in the art.

Where aqueous alkali metal chloride solution is to be electrolysed and the electrode is to be used as a cathode the electrode is suitably made of iron or steel, or of other suitable metal, for example nickel.

The cathode may be coated with a material designed to reduce the hydrogen overpotential of the electrolysis.

Any suitable construction of electrode may be used in the electrolytic cell. For example, the electrode may comprise a plurality of elongated members, e.g. rods or strips, or it may comprise a foraminate surface, e.g. a perforated plate, a mesh, or an expanded metal.

The invention is illustrated by the following examples.

Example 1

An ion-exchange membrane in the form of a square-shaped laminate formed of a sheet of a copolymer of tetrafluoroethylene and a perfluorovinyl ether containing sulphonic acid groups in the potassium salt form and a sheet of a copolymer of tetrafluoroethylene and a perfluorovinyl ether containing carboxylic acid groups in the potassium salt form was immersed in distilled water for 30 minutes. The laminate was removed from the water and, whilst wet, it was clamped in a stretching frame, each of the four sides of the laminate being so clamped. Whilst still wet the laminate was carefully stretched on the frame by causing the clamps attached to two opposite sides of the laminate to be forced apart whilst maintaining a constant distance between the clamps attached to the other two opposite sides of the laminate.

By careful stretching it was found to be possible to stretch the laminate uniaxially by 51%, that is to effect an increase of 51% in the surface area per unit weight of the membrane.

Thereafter the laminate became torn.

By way of comparison the above procedure was repeated except that the laminate was not immersed in distilled water prior to stretching. In this case it was found that by careful stretching an expansion of only 13% could be achieved before the laminate became torn, that is it was possible to effect an increase in the surface area per unit weight of the laminate of only 13%.

Example 2

The procedure of Example 1 was repeated except that instead of immersing the laminate in distilled water the laminate was immersed in 2% by weight aqueous sodium bicarbonate solution for 30 minutes. This treatment converted the acidic groups in the ion-exchange membrane to the sodium salt form.

Whilst still wet the laminate was stretched following the procedure of Example 1 until the laminate had been stretched uniaxially by 26%, and the laminate was dried on the stretching frame by applying a stream of air to the laminate. When the laminate was dry it was removed from the frame. It showed little or no tendancy to return to its original dimensions. The surface area per unit weight of the laminate had been increased by 26%.

The stretched ion-exchange membrane laminate was securely and tautly clamped between a pair of gaskets of EPDM rubber and mounted in an electrolytic cell equipped with a 7.5 cm diameter nickel mesh cathode and a 7.5 cm diameter titanium mesh anode coated with a coating of a mixture of $RuO_2$ and $TiO_2$ in a proportion of 35 $RuO_2$:65 $TiO_2$ by weight.

310 g/l aqueous NaCl solution at a pH of 8.0 was charged to the anode compartment of the cell and water was charged to the cathode compartment of the cell and the NaCl was electrolysed therein at a temperature of 90°C, the concentration of NaCl in the anode compartment during electrolysis being 200 g/l.

Chlorine and depleted NaCl solution were removed from the anode compartment and

hydrogen and aqueous NaOH (35% by weight) were removed from the cathode compartment.

After a total of 20 days electrolysis the cell was opened and the ion-exchange membrane examined. The membrane was found to be taut and not wrinkled.

By way of comparison the above procedure was repeated except that after removal from the sodium bicarbonate solution the laminate was allowed to dry before mounting on the stretching frame. When stretched the membrane became torn after stretching uniaxially to an extent of 10%. The electrolysis procedure was repeated with an ion-exchange membrane which had been immersed in sodium bicarbonate solution and allowed to dry. After 20 days electrolysis the membrane was slack and unwrinkled.

Example 3

The procedure of Example 1 was repeated except that the laminate of ion-exchange membrane also comprised a gauze reinforcement embedded therein. In this case, after immersion in distilled water, it was found to be possible to stretch the laminate uniaxially by 41% before the laminate became torn.

By way of comparison when the above procedure was repeated except that the membrane was not immersed in distilled water and it was found to be possible to stretch the laminate uniaxially by only 20% before the laminate became torn.

Example 4

The procedure of Example 1 was repeated with a different ion-exchange membrane which was also in the form of a laminate formed of a sheet of a copolymer of tetrafluoroethylene and a perfluorovinyl ether containing sulphonic acid groups in the potassium salt form and a sheet of a copolymer of tetrafluoroethylene and a perfluorovinyl ether containing carboxylic acid groups in the potassium salt form.

After immersion in distilled water it was found to be possible to stretch the laminate by 62% before the laminate became torn.

By way of comparison when the laminate was not immersed in distilled water it was found to be possible to stretch the laminate uniaxially by only 25%.

Example 5

An ion-exchange membrane in the form of a square-shaped laminate as used in Example 1 was immersed for 20 minutes in a 0.2 molar aqueous solution of tetramethyl ammonium chloride and whilst wet the laminate was mounted on a Bruckner stretching frame and stretched thereon to an extent of 20% in the machine direction and 10% in the transverse direction of the laminate. The laminate was dried in a stream air and removed from the frame. The laminate did not shrink back to its original dimensions.

The laminate had been stretched such that the surface area per unit weight had been increased by 32%.

Example 6

A 0.17 mm thick sheet of a cation-exchange membrane comprising a laminate of perfluorinated polymer containing sulphonic acid groups in the potassium salt form and a perfluorinated polymer containing carboxylic acid groups in the potassium salt form was immersed in a 200 mN aqueous ammonium bicarbonate solution for 24 hours at ambient temperature; the sheet was removed from the solution and immersed in a 200 mN aqueous solution of tetramethyl ammonium chloride for 48 hours at ambient temperature, and the membrane was removed from the solution and allowed to dry at ambient temperature. The sheet was then immersed in water for 2 minutes, the membrane sheet was drawn uniaxially in the transverse direction in a Long Stentor frame by a factor of 1.36, restrained in the machine direction, and dried in a stream of compressed air prior to removal from the Stentor frame.

After 24 hours the membrane sheet was found to have expanded by 31% in the transverse direction and in the machine direction it was found to have its original dimensions. The surface area per unit weight of the membrane sheet had been increased by 31%.

Example 7

A membrane sheet as used in Example 6 was immersed in a 200 mN aqueous solution of tetramethyl ammonium chloride for 10 minutes at ambient temperature, and the membrane sheet was removed from the solution, surface dried, mounted in a Long Stentor frame, and biaxially drawn by a factor of 1.26 in each direction. The membrane sheet was then dried in air whilst still mounted on the Stentor frame. 24 hours after removal from the Stentor frame the dimensions of the membrane sheet in both the transverse and machine directions were found to have increased by 22%, that is the surface area per unit weight of the membrane sheet had increased by 48.8%.

**Claims**

1. A method of treating an ion-exchange membrane of an organic polymer containing ion-exchange groups or groups convertible to ion-exchange groups in which method the membrane is expanded by stretching the membrane in order to effect an increase of at least 5% in the surface area per unit weight of the membrane, the membrane containing a liquid medium during the stretching of the membrane.

2. A method according to claim 1 wherein the membrane is caused to contain the liquid medium by contacting the membrane with the liquid medium, prior to expanding the membrane by stretching, for at least 5 minutes.

3. A method according to claim 1 wherein the liquid medium is water or an aqueous solution of at least one alkali metal hydroxide, carbonate, bicarbonate or chloride.

4. A method according to claim 1 wherein the liquid medium is an aqueous solution of at least

one alcohol or polyol or at least one alcohol or polyol per se.

5. A method according to claim 1 wherein the membrane is stretched to result in an increase of 20 to 50% in the surface area per unit weight of the membrane.

6. A method according to claim 1 wherein the membrane is stretched to result in an increase of at least 50% in the surface area per unit weight of the membrane.

7. A method according to claim 1 wherein the membrane is subsequently dried.

8. A method according to claim 7 wherein the drying of the membrane is assisted by heating the membrane and/or by applying a stream of air to the membrane.

9. A method according to claim 1 wherein the membrane comprises an organic polymer containing the groups.

$$[C_m F_{2m}]_M \quad \text{and} \quad [CF_2\text{—}\underset{\underset{X}{|}}{C}F]_N$$

where m has a value of 2 to 10, the ratio of M to N is such as to give an equivalent weight of the groups X in the range 500 to 2000, that is to give a gram equivalent of X per 500 to 2000 gms of polymer, and X is chosen from

$$A \quad \text{or} \quad [\text{—}OCF_2\text{—}\underset{\underset{Z}{|}}{C}F]_pA$$

where p has a value of 1 to 3, Z is fluorine or a perfluoroalkyl group having from 1 to 10 carbon atoms and A is a carboxylic acid group, a sulphonic acid group or a phosphonic acid group, or a derivative thereof.

10. A method according to claim 9, wherein A is an alkali metal salt of an acidic group.

11. A method according to claim 1 wherein the membrane comprises a copolymer of tetrafluoroethylene and a perfluorovinyl ether containing sulphonic acid groups in the potassium or sodium salt form.

12. A method according to claim 1 wherein the membrane comprises a copolymer of tetrafluoroethylene and a perfluorovinyl ether containing carboxylic acid groups in the potassium or sodium salt form.

13. A method according to claim 1 wherein the membrane comprises an organic polymer material which contains the groups

$$[C_m F_{2m}]_M \quad \text{and} \quad [CF_2\text{—}\underset{\underset{E}{|}}{C}F]_N$$

where m has a value of 2 to 10, and is preferably 2, the ratio of M to N is preferably such as to give an equivalent weight of the groups E in the range 500 to 2000, and E is chosen from

$$G^- Y^+ \quad \text{or} \quad [\text{—}OCF_2\text{—}\underset{\underset{Z}{|}}{C}F]_pG^-Y^+$$

where p has a value of for example 1 to 3, Z is fluorine or a perfluoroalkyl group having from 1 to 10 carbon atoms and $G^-$ is a fixed anionic group, e.g. $\text{—}COO^-$ or $\text{—}SO_3^-$, and $Y^+$ is a cation containing an organic group or a plurality of organic groups.

14. A method according to claim 13 wherein $Y^+$ is a quaternary ammonium cation.

15. A method according to claim 1 wherein the membrane comprises a copolymer of tetrafluoroethylene and a perfluorovinyl ether containing sulphonic acid groups in the tetramethylammonium salt form.

16. A method according to claim 1 wherein the membrane comprises a copolymer of tetrafluoroethylene and a perfluorovinyl ether containing carboxylic acid groups in the tetramethylammonium salt form.

**Patentansprüche**

1. Verfahren zur Behandlung einer Ionenaustauschmembrane aus einem organischen Polymer, das Ionenaustauschgruppen oder in Ionenaustauschgruppen überführbare Gruppen enthält, bei welchem Verfahren die Membrane durch Strecken der Membrane gedehnt wird, so daß eine Zunahme der Oberfläche je Gewichtseinheit der Membrane um mindestens 5% stattfindet, wobei die Membrane während des Streckens der Membrane ein flüssiges Medium enthält.

2. Verfahren nach Anspruch 1, bei welchem die Membrane dadurch zur Aufnahme des flüssigen Mediums veranlaßt wird, daß die Membrane vor dem Dehnen der Membrane durch Strecken mindestens 5 min mit dem flüssigen Medium zusammengebracht wird.

3. Verfahren nach Anspruch 1, bei welchem das flüssige Medium aus Wasser oder einer wäßrigen Lösung mindestens eines Alkalimetallhydroxids, -carbonats, -bicarbonats oder -chlorids besteht.

4. Verfahren nach Anspruch 1, bei welchem das flüssige Medium eine wäßrige Lösung mindestens eines Alkohols oder Polyols oder mindestens ein Alkohol oder Polyol selbst ist.

5. Verfahren nach Anspruch 1, bei welchem die Membrane so gestreckt wird, daß eine Vergrößerung der Oberfläche je Gewichtseinheit der Membrane von 20 bis 50% stattfindet.

6. Verfahren nach Anspruch 1, bei welchem die Membrane so gestreckt wird, daß eine Zunahme der Oberfläche je Gewichtseinheit der Membrane von mindestens 50% stattfindet.

7. Verfahren nach Anspruch 1, bei welchem die Membrane anschließend getrocknet wird.

8. Verfahren nach Anspruch 7, bei welchen das Trocknen der Membrane durch Erhitzen der Membrane und/oder durch Anwenden eines Luftstroms auf die Membrane unterstützt wird.

9. Verfahren nach Anspruch 1, bei welchem die Membrane ein organisches Polymer enthält oder

aus einem solchen besteht, das die Gruppen

$[C_m F_{2m}]_M$ und $[CF_2—CF]_N$
|
X

enthält, worin m einen Wert von 2 bis 10 hat, das Verhältnis von M zu N derart ist, daß ein Äquivalentgewicht der Gruppen X im Bereich von 500 bis 2000 erhalten wird, d.h., daß ein Grammäquivalent von X je 500 bis 2000 g Polymer gegeben ist, und X ausgewählt ist aus

A oder $[—OCF_2—CF]_pA$
|
Z

worin p einen Wert von 1 bis 3 hat, Z für Fluor oder eine Perfluoroalkylgruppe mit 1 bis 10 Kohlenstoffatomen steht und A eine Carbonsäuregruppe, eine Sulfonsäuregruppe oder eine Phosphonsäuregruppe oder ein Derivat davon ist.

10. Verfahren nach Anspruch 9, bei welchem A für eine Alkalimetallsalz- oder eine saure Gruppe steht.

11. Verfahren nach Anspruch 1, bei welchem die Membrane aus einem Copolymer besteht oder ein solches enthält, das sich aus Tetrafluoroethylen und aus einem Perfluorovinylether mit Sulfonsäuregruppen in der Kalium- oder Natriumsalzform zusammensetzt.

12. Verfahren nach Anspruch 1, bei welchem die Membrane aus einem Copolymer besteht oder ein solches enthält, das sich aus Tetrafluoroethylen und einem Perfluorovinylether mit Carbonsäuregruppen in der Kalium- oder Natriumsalzform zusammensetzt.

13. Verfahren nach Anspruch 1, bei welchem die Membrane aus einem organischen Polymer besteht oder ein solches enthält, das die Gruppen

$[C_m F_{2m}]_M$ und $[CF_2—CF]_N$
|
E

enthält, worin m einen Wert von 2 bis 10 und vorzugsweise 2 hat, das Verhältnis von M zu N vorzugsweise der Art ist, daß ein Äquivalentgewicht der Gruppen E im Bereich von 500 bis 2000 erhalten wird, und E ausgewählt ist aus

$G^- Y^+$ oder $[—OCF_2—CF]_pG^-Y^+$
|
Z

worin p einen Wert von beispielsweise 1 bis 3 hat, Z für Fluor oder eine Perfluoroalkylgruppe mit 1 bis 10 Kohlenstoffatomen steht, $G^-$ eine feste anionische Gruppe, z.B. $—COO^-$ oder $—SO_3^-$, ist und $Y^+$ ein Kation, das eine organische Gruppe oder mehrere organische Gruppen enthält, ist.

14. Verfahren nach Anspruch 13, bei welchem $Y^+$ ein quaternäres Ammoniumkation ist.

15. Verfahren nach Anspruch 1, bei welchem die Membrane ein Copolymer aus Tetrafluoroethylen und einen Perfluorovinylether mit Sulfonsäuregruppen in der Tetramethylammoniumsalzform enthält oder aus einem solchen besteht.

16. Verfahren nach Anspruch 1, bei welchem die Membrane ein Copolymer aus Tetrafluoroethylen und einen Perfluorovinvylether mit Carbonsäuregruppen in der Tetramethylammoniumsalzform enthält oder aus einem solchen besteht.

**Revendications**

1. Procédé pour traiter une membrane échangeuse d'ions d'un polymère organique contenant des radicaux échangeurs d'ions ou des radicaux convertibles en radicaux échangeurs d'ions, suivant lequel procédé la membrane est expansée par étirage de la membrane en vue d'amener une augmentation d'au moins 5% de la surface par unité de poids de la membrane la membrane contenant un milieu liquide pendant l'étirage de la membrane.

2. Procédé suivant la revendication 1, dans lequel la membrane est amenée à contenir le milieu liquide par mise en contact de la membrane avec le milieu liquide, avant l'expansion de la membrane par étirage, pendant au moins 5 minutes.

3. Procédé suivant la revendication 1, dans lequel le milieu liquide est l'eau ou une solution aqueuse d'au moins un hydroxyde, carbonate, bicarbonate ou chlorure de métal alcalin.

4. Procédé suivant la revendication 1, dans lequel le milieu liquide est une solution aqueuse d'au moins un alcool ou polyol ou est au moins un alcool ou polyol tel quel.

5. Procédé suivant la revendication 1, dans lequel la membrane est étirée pour induire une augmentation de 20 à 50% de la surface par unité de poids de la membrane.

6. Procédé suivant la revendication 1, dans lequel la membrane est étirée pour induire une augmentation d'au moins 50% de la surface par unité de poids de la membrane.

7. Procédé suivant la revendication 1, dans lequel la membrane est ensuite séchée.

8. Procédé suivant la revendication 7, dans lequel le séchage de la membrane est favorisé par chauffage de la membrane et/ou par exposition de la membrane à un courant d'air.

9. Procédé suivant la revendication 1, dans lequel la membrane comprend un polymère organique contenant les radicaux

$[C_m F_{2m}]_M$ et $[CF_2—CF]_N$
|
X

où m a une valeur de 2 à 10, le rapport de M à N est de nature à donner un poids équivalent des radicaux X de l'intervalle de 500 à 2000, à savoir donner un équivalentgramme de X pour 500 à 2000 g de polymère, et X est choisi entre

$$A \quad \text{et} \quad [-OCF_2-\underset{\displaystyle Z}{\underset{|}{CF}}]_pA$$

où p a une valeur de 1 à 3, Z est un radical fluoro ou perfluoroalcoyle de 1 à 10 atomes de carbone et A est un radical acide carboxylique, un radical acide sulfonique ou un radical acide phosphonique, ou bien un dérivé de ceux-ci.

10. Procédé suivant la revendication 9, dans lequel A est un sel de métal alcalin d'un radical acide.

11. Procédé suivant la revendication 1, dans lequel la membrane comprend un copolymère de tétrafluoroéthylène et d'un éther perfluorovinylique contenant des radicaux acide sulfonique sous la forme du sel de potassium ou de sodium.

12. Procédé suivant la revendication 1, dans lequel la membrane comprend un copolymère de tétrafluoroéthylène et d'un éther perfluorovinylique contenant des radicaux acide caboxylique sous la forme du sel de potassium ou de sodium.

13. Procédé suivant la revendication 1, dans lequel la membrane comprend une matière polymère organique qui contient les radicaux

$$[C_m F_{2m}]_M \quad \text{et} \quad [CF_2-\underset{\displaystyle E}{\underset{|}{CF}}]_N$$

où m a une valeur de 2 à 10 et vaut de préférence 2, le rapport de M à N est de préférence de nature à donner un poids équivalent des radicaux E de l'intervalle de 500 à 2000, et E est choisi entre

$$G^-Y^+ \quad \text{et} \quad [-OCF_2-\underset{\displaystyle Z}{\underset{|}{CF}}]_pG^-Y^+$$

où p a une valeur, par exemple, de 1 à 3, Z est un radical fluoro ou perfluoroalcoyle comptant 1 à 10 atomes de carbon, $G^-$ est un radical anionique fixé, par exemple $-COO^-$ ou $-SO_3^-$, et $Y^+$ est un cation contenant un radical organique ou plusieurs radicaux organiques.

14. Procédé suivant la revendication 13, dans lequel $Y^+$ est un cation ammonium quaternaire.

15. Procédé suivant la revendication 1, dans lequel la membrane comprend un copolymère de tétrafluoroéthylène et d'un éther perfluorovinylique contenant des radicaux acide sulfonique sous la forme du sel de tétraméthylammonium.

16. Procédé suivant la revendication 1, dans lequel la membrane comprend un copolymère de tétrafluoroéthylène et d'un éther perfluorovinylique contenant des radicaux acide carboxylique sous la forme du sel de tétraméthylammonium.